# DEMANDE DE BREVET EUROPEEN

(11) **EP 4 759 756 A1**
(43) Date de publication de la demande: **17.06.2026**
(21) Numéro de dépôt: 25219240.6
(22) Date de dépôt: 27.11.2025
(51) Int. Cl.: B65G 1/137, B65G 21/10

(54) **STATION D'INTERVENTION D'UN CONVOYEUR**

(30) Priorité: 13.12.2024 FR 2414073
(71) Demandeur: Exotec Product France, 59170 Croix (FR)
(72) Inventeur: DE TONNAC, Dimitri, 59260 LEZENNES (FR); LEPILLIER, Loïc, 59150 WATTRELOS (FR); CAGNAC, Bastien, 59290 WASQUEHAL (FR)
(74) Mandataire: Plasseraud IP

(57) **Abrégé**

Station d'intervention (1) d'un convoyeur pour le traitement de commandes contenues dans des conteneurs (2), comprenant une piste de convoyage (10) configurée pour acheminer les conteneurs (2), la piste de convoyage (10) comprenant une portion d'intervention (13), adjacente à une zone d'intervention Z d'un opérateur, ladite portion d'intervention (13) étant configurée pour que l'opérateur (3) puisse réaliser des opérations sur les conteneurs (2), la piste de convoyage (10) comprenant une partie fixe (15) et une partie mobile (14) comprenant la portion d'intervention (13), la station d'intervention (1) comprenant en outre un mécanisme de réglage (4) de la piste de convoyage (10) pour régler une hauteur de la portion d'intervention (13), ladite hauteur étant mesurée par rapport à une hauteur de référence de la zone d'intervention, en mettant en mouvement la partie mobile (14) par rapport à la partie fixe (15).

## Description

### Domaine technique

Le domaine de la présente divulgation est celui des systèmes de stockage automatisé « ASRS » (de l'anglais « Automated Storage and Retrieval System ») et de tout autre système de transport d'articles ou de marchandises utilisant des convoyeurs.

### Technique antérieure

Sur des convoyeurs de marchandises, des opérateurs sont amenés à réaliser un certain nombre d'interventions sur des commandes contenues dans des conteneurs acheminés par les convoyeurs. A cette fin, il peut être prévu une ou plusieurs stations d'intervention. Par ""convoyeur", on entend un système ou un dispositif conçu pour transporter des marchandises, des produits ou des matériaux d'un point à un autre à l'intérieur d'une installation logistique ou industrielle. Ces systèmes permettent d'automatiser le déplacement des charges, d'optimiser les flux de travail et d'améliorer l'efficacité des opérations, en réduisant les efforts humains et le temps nécessaire pour le transport. L'ergonomie des postes d'intervention est un point important des systèmes de stockage automatisé.

Les tâches effectuées peuvent être pénibles si la position de l'opérateur n'est pas parfaitement adaptée. Par ailleurs, les articles ou conteneurs acheminés sur lesquels les opérateurs interviennent peuvent être de tailles variées. Une telle diversité de conteneurs peut engendrer un changement fréquent de position.

Il est connu de positionner des plateformes réglables à côté des stations d'intervention pour pouvoir adapter la hauteur de travail de l'opérateur. En effet, plutôt que d'être positionné sur le sol, ou sur une structure fixe, l'opérateur peut monter sur une plateforme, et ainsi abaisser ou surélever sa hauteur pour améliorer son confort.

Un tel réglage peut être effectué notamment en fonction de la taille de l'opérateur, afin qu'il puisse adopter une hauteur de travail parfaitement adaptée à sa morphologie. Toutefois, cette considération n'est qu'un exemple parmi de nombreuses situations où un ajustement de hauteur peut s'avérer nécessaire. Par exemple, certains opérateurs préfèrent limiter l'amplitude de leurs mouvements pour réduire la fatigue musculaire, ce qui nécessite de positionner la zone de travail à une hauteur spécifique. De même, une vision imparfaite peut inciter un opérateur à se rapprocher davantage des articles afin de mieux les identifier ou les manipuler avec précision.

Par ailleurs, certaines tâches impliquent la manipulation d'articles lourds ou encombrants, pour lesquels il est essentiel de minimiser la distance entre les bras ou les mains de l'opérateur et les articles eux-mêmes, réduisant ainsi les contraintes physiques et améliorant l'ergonomie. La nature des commandes à traiter peut également jouer un rôle déterminant : des articles nécessitant une grande précision, une manipulation délicate ou un effort accru pour leur prise en main appellent souvent à un ajustement fin de la hauteur de travail. En définitive, il existe donc un très grand nombre de situations de travail qui impliquent ou nécessitent un ajustement de la hauteur de travail de l'opérateur.

Cela étant, les plateformes en hauteur présentent des inconvénients parfois rédhibitoires.

Tout d'abord, leur présence implique nécessairement une marche à franchir pour y accéder, ce qui oblige les opérateurs à monter et descendre régulièrement, augmentant ainsi le risque de chutes. Ce risque est d'autant plus important, que plusieurs relèves d'opérateurs peuvent avoir lieu chaque jour sur un même poste, amplifiant les probabilités d'incidents.

Par ailleurs, ces plateformes nécessitent l'installation de structures volumineuses et coûteuses, qui encombrent l'entrepôt et réduisent significativement l'espace disponible. Cette diminution impacte non seulement la circulation des opérateurs et des équipements, mais également la capacité de stockage, essentielle pour optimiser les opérations logistiques. De plus, une fois sur la plateforme, l'opérateur est confiné dans un espace restreint. Pour pallier cette limitation et couvrir plusieurs postes ou zones de travail, il est nécessaire de concevoir des plateformes de grande taille, ce qui accentue encore les problèmes d'encombrement, de coûts et d'adaptation à l'espace de l'entrepôt. En résumé, de telles solutions s'avèrent loin d'être idéales face aux exigences des environnements logistiques modernes.

On connaît, du document EP4134337, une station d'intervention comprenant un convoyeur pour acheminer des conteneurs devant un opérateur, le convoyeur comprenant une portion de convoyeur inclinable destinée à orienter un conteneur en direction d'un opérateur. Le changement d'orientation du conteneur facilite le retrait des articles du conteneur par un opérateur en lui permettant une meilleure vision et un meilleur accès aux articles du conteneur. Cependant, l'adaptabilité d'une telle station à un opérateur est limitée par l'angle d'inclinaison du convoyeur inclinable.

La présente divulgation a donc pour objectif de pallier au moins en partie les inconvénients de l'état de la technique cités ci-dessus.

### Résumé

Les objectifs mentionnés ci-dessus sont atteints notamment par une station d'intervention d'un convoyeur pour le traitement de commandes contenues dans des conteneurs, comprenant une piste de convoyage configurée pour acheminer les conteneurs, la piste de convoyage comprenant une portion d'intervention, adjacente et en hauteur par rapport à une zone d'intervention Z sur laquelle est positionné un opérateur, ladite portion d'intervention étant configurée pour que l'opérateur puisse réaliser des opérations sur les conteneurs acheminés par la piste de convoyage, la piste de convoyage comprenant une partie fixe et une partie mobile, la partie mobile comprenant la portion d'intervention, la station d'intervention comprenant en outre un mécanisme interne de réglage de la piste de convoyage configuré pour régler une hauteur de la portion d'intervention, ladite hauteur étant mesurée par rapport à une hauteur de référence de la zone d'intervention de l'opérateur, en mettant en mouvement la partie mobile de la piste de convoyage par rapport à la partie fixe.

De manière particulièrement avantageuse, la station d'intervention selon la présente divulgation présente une portion d'intervention ajustable en hauteur, typiquement selon une direction verticale, faisant partie de la piste de convoyage. Cette configuration améliore l'ergonomie et l'efficacité de l'opérateur en permettant un accès optimal aux conteneurs, réduisant ainsi la fatigue et augmentant la productivité. Cela permet également une adaptation rapide et précise de la hauteur de travail en fonction des besoins spécifiques de l'opérateur ou des caractéristiques des conteneurs, ce qui améliore la flexibilité et l'adaptabilité de la station d'intervention. L'ajustement en hauteur de la portion d'intervention permet de couvrir une grande plage de variations dans le gabarit des opérateurs.

Une telle solution permet, le cas échéant, de s'affranchir de plateformes d'élévation additionnelles, et donc de supprimer le risque de chutes qu'engendrent de telles plateformes. L'encombrement et le coût liés à ces plateformes sont également supprimés.

En outre, la présence d'une partie mobile intégrant la portion d'intervention sur laquelle les conteneurs sont acheminés permet de maintenir une continuité dans le flux de convoyage pendant le réglage de la hauteur de travail. Cela permet d'atteindre des cadences élevées de traitement des commandes, optimisant ainsi le rendement global du système de convoyage.

Les caractéristiques exposées dans les paragraphes suivants peuvent, optionnellement, être mises en oeuvre, indépendamment les unes des autres ou en combinaison les unes avec les autres :
Selon un perfectionnement, la piste de convoyage, y compris la portion d'intervention, comprend une allée configurée pour permettre à un véhicule à guidage automatique supportant un conteneur de rouler sur ladite piste de convoyage.

Une telle allée peut former une surface sensiblement plane sur laquelle les véhicules automatiques peuvent rouler pour acheminer les conteneurs.

De cette façon, la station d'intervention améliore encore l'efficacité et la rapidité du traitement des commandes. En effet, les conteneurs peuvent ainsi être acheminés de manière autonome jusqu'à la portion d'intervention, où l'opérateur peut alors se concentrer sur les opérations à haute valeur ajoutée, sans avoir à manipuler manuellement les conteneurs pour les ramener vers la zone d'intervention.

Selon un perfectionnement, la piste de convoyage comporte une première portion d'acheminement et une deuxième portion d'acheminement reliées l'une à l'autre par la portion d'intervention, la piste de convoyage étant configurée pour acheminer les conteneurs par la première portion d'acheminement jusqu'à la deuxième portion d'acheminement en passant par la portion d'intervention.

Cette disposition permet de maintenir un flux de convoyage ininterrompu, même lorsque des opérations sont effectuées sur les conteneurs dans la portion d'intervention. Cela améliore l'efficacité du système de convoyage en minimisant les interruptions et en permettant un traitement simultané des conteneurs sur différentes portions de la piste.

Selon un perfectionnement, la première portion d'acheminement et la deuxième portion d'acheminement s'étendent l'une à côté de l'autre, toutes deux d'un même côté de la portion d'intervention.

Cette configuration permet à la station d'intervention de présenter une forme en « U », la portion d'intervention constituant une extrémité de la piste de convoyage. Une telle configuration réduit la complexité du mécanisme nécessaire au mouvement de la partie mobile de la piste de convoyage. En simplifiant ainsi le mécanisme de réglage, cette disposition permet une maintenance plus facile et moins coûteuse, ainsi qu'une réduction des risques de dysfonctionnement.

Le mouvement simplifié de la partie mobile rend celle-ci plus fiable et durable, ce qui contribue à prolonger la durée de vie de la station d'intervention. Enfin, en ayant les deux portions d'acheminement du même côté de la portion d'intervention, la station d'intervention peut être intégrée de manière plus compacte et optimisée dans l'environnement de travail, ce qui permet une meilleure utilisation de l'espace disponible et une organisation plus efficace des flux de travail.

Selon un perfectionnement, la piste de convoyage présente une direction générale V selon laquelle les conteneurs progressent, la portion mobile de la piste de convoyage est reliée à la partie fixe ou au bâti de façon rotative par une articulation présentant un axe de rotation s'étendant transversalement à la direction V, typiquement horizontal, le réglage de la hauteur de la portion d'intervention étant réalisé par rotation de la partie mobile par rapport à la partie fixe autour de ladite articulation.

Le fait de relier la partie mobile à la partie fixe par une charnière permet une meilleure intégration de la station d'intervention dans des systèmes de convoyage existants, en offrant une solution flexible et adaptable qui peut être facilement ajustée en fonction des besoins spécifiques de l'application. Cela permet d'optimiser les processus de traitement des commandes et d'améliorer l'efficacité globale du système de convoyage. Aussi, le fait que l'articulation soit aménagée transversalement à la direction générale de progression des conteneurs, le cas échéant des véhicules à guidage automatique, permet de modifier le réglage de la hauteur de la portion d'intervention sans interrompre le flux de convoyage. Les conteneurs typiquement transportés par les véhicules peuvent effectivement continuer à progresser sur la piste même lorsqu'elle se trouve en cours de réglage.

Selon un perfectionnement, la partie mobile de la piste de convoyage s'étend en longueur suivant la direction générale V à partir de ladite articulation jusqu'à une extrémité distale, la portion d'intervention étant adjacente à ladite extrémité distale.

Ainsi, la station d'intervention constitue une extrémité de la piste de convoyage, et la portion d'intervention est présentée à proximité de la zone d'intervention. La portion mobile forme alors un bras de levier permettant, à l'aide d'un mécanisme simple, d'ajuster une hauteur de la portion d'intervention par rotation autour de ladite articulation.

Selon un perfectionnement, la portion d'intervention comprend un bord d'intervention au niveau de ladite extrémité distale, la zone d'intervention Z étant située d'un premier côté du bord d'intervention, et les conteneurs étant acheminés sur la portion d'intervention d'un deuxième côté du bord d'intervention opposé au premier côté.

Par ailleurs, la distance entre la portion d'intervention et l'axe de l'articulation peut être typiquement supérieure à 1 mètre, voire supérieure à 1,5m, voire supérieure à 2m, voire supérieure à 2,5 mètres par exemple 3 mètres, de sorte à permettre une course de réglage de la portion d'intervention suivant la direction verticale au moins égale à plus ou moins 100 mm (±100mm) et par rapport à une position nominale de la portion d'intervention, correspondant à une course angulaire de la partie mobile autour de l'axe d'articulation inférieure ou égale à plus ou moins 5°, et de préférence à plus ou moins 4° telle que plus ou moins 2°.

Une course de réglage verticale à plus ou moins 100 mm permet de couvrir 95% des besoins d'ajustement d'une population adulte.

Selon un mode de réalisation, et pour une position nominale correspondant à un angle d'inclinaison nominal de la portion d'intervention qui peut être de 9 vers la zone d'intervention (à ±3°), une variation de la course angulaire de la portion mobile autour de l'angle d'inclinaison nominal entraine une course de réglage verticale de la portion d'intervention au moins égale à plus ou moins 100mm (±100mm) autour de la hauteur de la portion d'intervention lorsque dans son inclinaison nominale. Par exemple la distance entre la portion d'intervention et l'axe de l'articulation peut être de 3 mètres et l'angle d'inclinaison nominal est de 9°. Une variation de plus ou moins 2° engendre une élévation de plus ou moins 104mm.

Selon un exemple, la portion d'intervention peut s'étendre, en s'éloignant de la zone d'intervention, ou le cas échéant en s'éloignant du bord d'intervention, sur une distance égale à une dimension maximale du conteneur le plus grand acheminé sur la portion d'intervention. Typiquement, la portion d'intervention s'étend sur une longueur, en s'éloignant de la zone d'intervention, comprise entre 30 et 100cm. Selon un exemple, la distance entre la portion d'intervention et l'axe de l'articulation pourra être mesurée entre une projection orthogonale dudit axe sur un plan formé par la piste de convoyage et un bord de la portion d'intervention.

Un tel bord de la portion d'intervention pourra être, selon un premier exemple, un bord d'intervention de la portion d'intervention, constituant le bord le plus proche de l'opérateur, ou selon un autre exemple, un tel bord pourra être un bord de la portion d'intervention opposé au bord d'intervention, correspondant au bord de la portion d'intervention le plus proche de l'articulation.

Selon un perfectionnement, la partie mobile comprend une première portion de piste montante, suivant la direction principale V vers l'extrémité distale, et la portion d'intervention forme une deuxième portion de piste, selon une inclinaison opposée par rapport à la première portion, la deuxième portion étant descendante en direction de l'extrémité distale, configurée pour incliner un conteneur acheminé sur la portion d'intervention vers la zone d'intervention.

De cette façon, la portion d'intervention présente une pente permettant de pencher les conteneurs vers l'opérateur, ce qui permet un accès facilité aux conteneurs. La première portion de piste, montante, permet aux conteneurs d'être acheminés à une hauteur supérieure à une hauteur de travail choisie par l'opérateur, de sorte que la pente descendante nécessaire à l'inclinaison des conteneurs vers l'opérateur ramène la portion d'intervention à la hauteur choisie.

Par ailleurs, la pente descendante de la deuxième portion de piste qui est configurée pour incliner un conteneur acheminé sur la portion d'intervention vers la zone d'intervention, est d'inclinaison descendante pour toutes les valeurs de hauteur H permises par le mécanisme interne de réglage.

Selon un perfectionnement, le mécanisme de réglage comprenant une pièce crantée montée à distance, selon la direction générale V, de l'articulation sur l'une de la partie fixe ou de la partie mobile de la piste de convoyage, et une pièce complémentaire montée sur l'autre de la partie fixe ou de la partie mobile de la piste de convoyage, la pièce crantée comprenant une pluralité de crans correspondant à plusieurs valeurs de hauteur de la portion d'intervention de la piste de convoyage, un cran de la pièce crantée étant configuré pour coopérer avec la pièce complémentaire pour régler manuellement la portion d'intervention à une hauteur choisie.

Il est ainsi proposé un mécanisme de réglage manuel fiable, simple et économique pour le réglage de la hauteur de la portion d'intervention de la partie mobile.

Selon un perfectionnement, la station d'intervention comprend un actionneur dont une première extrémité est montée pivotante sur la partie fixe de la piste de convoyage et dont une deuxième extrémité est montée pivotante sur la partie mobile de sorte qu'un allongement ou une rétractation de l'actionneur permette de régler la hauteur de la portion d'intervention.

Cette configuration permet une automatisation complète du processus de réglage de la hauteur, ce qui améliore considérablement l'efficacité et la rapidité des ajustements. L'opérateur peut ainsi se concentrer sur les tâches de traitement des commandes sans avoir à effectuer manuellement les réglages de hauteur, ce qui réduit la fatigue et augmente la productivité.

Selon un perfectionnement, le mécanisme interne de réglage comprend deux vérins positionnés chacun de part et d'autre d'un plan médian longitudinal selon la direction d'avance V de la piste de convoyage.

De cette façon, une répartition équilibrée des forces exercées lors du réglage de la hauteur de la portion d'intervention est assurée. Cette disposition permet en outre de stabiliser la partie mobile de la piste de convoyage lors des ajustements de hauteur, réduisant ainsi les risques de déséquilibre et de vibrations. Cela améliore la précision et la fiabilité des réglages, garantissant une position stable et sécurisée de la portion d'intervention. Les vérins placés latéralement permettent de maintenir le centre de gravité entre eux, ce qui améliore la stabilité globale de la structure.

Selon un perfectionnement, la station d'intervention comprend une première piste de convoyage et une deuxième piste de convoyage, la première portion d'acheminement de la première piste de convoyage s'étendant à côté de la première portion d'acheminement de la deuxième piste de convoyage, de sorte que la portion d'intervention de la première piste de convoyage est positionnée à côté de la portion d'intervention de la deuxième piste de convoyage, le mécanisme interne de réglage étant configuré pour régler la hauteur de chacune des portions d'intervention de la première et de la deuxième piste de convoyage.

Ainsi, la station d'intervention permet de traiter simultanément la collecte et la préparation des commandes grâce à l'intégration de deux pistes de convoyage. La première portion d'acheminement de la première piste de convoyage s'étend à côté de la première portion d'acheminement de la deuxième piste de convoyage, de sorte que les portions d'intervention des deux pistes sont positionnées côte à côte et accessibles depuis le même poste d'intervention.

Selon un perfectionnement, le mécanisme interne comprend au moins deux actionneurs, dont un premier actionneur lié à la première piste de convoyage, et un deuxième actionneur lié à la deuxième piste de convoyage, de sorte que les hauteurs des deux portions d'interventions sont réglables de façon indépendante l'une de l'autre.

De cette façon, la station d'intervention permet un réglage indépendant de la hauteur des deux portions d'intervention des deux pistes de convoyage. Cela permet de traiter simultanément des conteneurs de différentes tailles et de répondre à des exigences variées sans compromettre l'efficacité, la productivité ou l'ergonomie du poste.

Selon un perfectionnement, la station d'intervention comprenant une interface homme-machine reliée à un processeur et à une mémoire, l'interface homme machine étant configurée pour, en réponse à une commande de l'opérateur, soit :
- régler la hauteur de la portion d'intervention à une valeur de hauteur disponible dans la mémoire, ou
- augmenter ou diminuer la hauteur de la portion d'intervention jusqu'à une valeur de hauteur choisie.

De cette façon, l'opérateur peut lui-même régler comme il le souhaite la hauteur de la portion d'intervention, et s'adapter facilement à différentes situations de travail.

De plus, la possibilité de prérégler des valeurs de hauteur dans la mémoire permet de gagner du temps et d'assurer une répétabilité et une précision des réglages. L'opérateur peut ainsi sélectionner rapidement une hauteur prédéfinie, ce qui améliore la productivité et réduit les risques d'erreurs.

La présente divulgation concerne en outre un ensemble comprenant une station d'intervention telle que décrite précédemment et au moins un véhicule automatisé de transport de conteneurs configuré pour acheminer les conteneurs le long de la piste de convoyage et au moins jusqu'à la portion d'intervention.

Cette configuration permet une automatisation accrue du processus de convoyage et de traitement des commandes.

La présente divulgation concerne également un procédé de préparation de commande mis en œuvre par un ensemble tel que précédemment décrit, le procédé comprenant une étape dans laquelle un conteneur est acheminé par un véhicule automatisé jusqu'à la portion d'intervention, et une étape d'intervention sur le conteneur réalisée par un opérateur, par exemple une opération de collecte d'un objet dans le conteneur, ou encore une opération de dépose d'un objet dans le conteneur.

En acheminant les conteneurs de manière autonome jusqu'à la portion d'intervention, le véhicule automatisé permet de libérer les opérateurs des tâches de transport, leur permettant de se concentrer sur des tâches à plus forte valeur ajoutée. Cela réduit la fatigue et les risques de blessures liés à la manipulation manuelle des conteneurs, améliorant ainsi les conditions de travail et la satisfaction des opérateurs.

Selon un perfectionnement, lorsque la station d'intervention comprend une interface homme-machine reliée à un processeur et à une mémoire, et comprend un actionneur dont une première extrémité est montée pivotante sur la partie fixe de la piste de convoyage et une deuxième extrémité est montée pivotante sur la partie mobile de sorte qu'un allongement ou une rétractation de l'actionneur permette de régler la hauteur de la portion d'intervention, le procédé comprend une étape de réglage de la hauteur de la portion d'intervention dans laquelle l'opérateur envoie une instruction via ladite interface homme machine au processeur qui pilote l'actionneur pour répondre à l'instruction de l'opérateur, et, une fois la portion d'intervention réglée selon ladite instruction, l'opérateur intervient sur le conteneur.

Selon un perfectionnement, lorsque le mécanisme interne de réglage de la station d'intervention comprend au moins deux actionneurs, dont un premier actionneur est lié à une première piste de convoyage, et un deuxième actionneur est lié à une deuxième piste de convoyage, de sorte que les hauteurs des deux portions d'intervention sont réglables de façon indépendante l'une de l'autre, le procédé comprend une première étape de réglage de la hauteur de la première piste de convoyage dans laquelle le processeur pilote le premier actionneur, et une deuxième étape de réglage de la hauteur de la deuxième piste de convoyage dans lequel le processeur pilote le deuxième actionneur, le réglage de la hauteur de la première étape étant indépendant du réglage de la hauteur de la deuxième étape.

Ainsi, lorsque par exemple un premier type de conteneur d'une taille donnée est acheminé sur la première portion d'intervention, et qu'un autre type de conteneur d'une autre taille donnée est acheminé sur la deuxième portion d'intervention, il est possible pour l'opérateur de réaliser un réglage indépendant de la hauteur des deux portions d'intervention de sorte que chaque portion d'intervention adopte une hauteur de travail optimale pour l'opérateur.

### Brève description des dessins

D'autres caractéristiques, détails et avantages apparaîtront à la lecture de la description détaillée ci-après, et à l'analyse des dessins annexés, sur lesquels :
[Fig. 1] montre une représentation schématique d'un convoyeur et d'une zone d'intervention au sol, selon un exemple,
[Fig. 2] montre une vue de dessus du convoyeur de la figure 1, sur laquelle on peut voir différentes tailles de conteneurs en cours d'acheminement et un opérateur se tenant dans la zone d'intervention, prêt à intervenir sur les conteneurs,
[Fig. 3] montre de façon non exhaustive, sur deux vues 3A et 3B, deux exemples de piste de convoyage,
[Fig. 4] montre une représentation schématique d'un premier exemple de station d'intervention selon la présente divulgation,
[Fig. 5] montre une représentation schématique vue de dessus d'un deuxième exemple de station d'intervention selon la présente divulgation, sur lequel la partie mobile de la piste de convoyage constitue une extrémité de la piste de convoyage,
[Fig. 6] montre une représentation schématique vue de côté de l'exemple de station d'intervention de la figure 5,
[Fig. 7] montre une représentation schématique vue de dessus d'un exemple particulier de station d'intervention comprenant deux pistes de convoyages,
[Fig. 8] montre une représentation en perspective d'un exemple particulier de station d'intervention,
[Fig. 9] montre une vue de côté de l'exemple de la figure 8,
[Fig. 10] montre une vue en coupe transversale d'un exemple particulier comprenant deux vérins, particulièrement visibles.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un véhicule de transport automatique dans sa position normale d'utilisation. Par ailleurs, le terme « sensiblement » est à interprété comme indiquant que le résultat obtenu l'est de façon aussi précise que la méthode connue pour le mesurer.

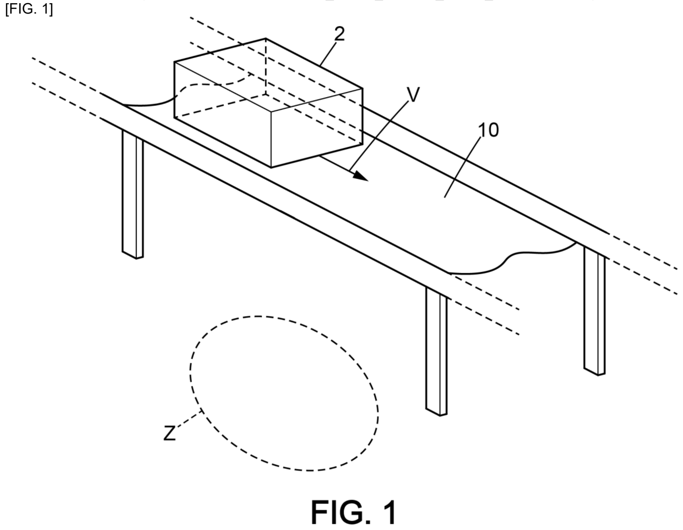

Il est maintenant fait référence à la figure 1, qui montre une station d'intervention 1 d'un convoyeur. Une telle station d'intervention 1 est notamment prévue pour le traitement de commandes contenues dans des conteneurs 2, acheminés sur la station d'intervention 1.

De tels traitements peuvent inclure typiquement des préparations de commande mais également des opérations de contrôle, de chargement, de déchargement, etc.

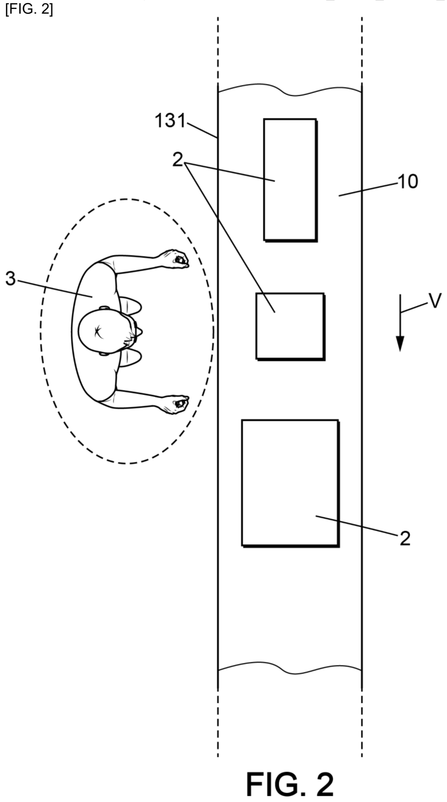

Les conteneurs 2 peuvent être de tailles variées et de poids différents. On peut voir notamment en figure 2 que des conteneurs 2 de tailles différentes peuvent être acheminés sur la station d'intervention 1.

La station d'intervention 1 comprend une piste de convoyage 10 configurée pour acheminer les conteneurs 2, typiquement d'une autre portion de convoyeur située en amont de la station d'intervention 1.

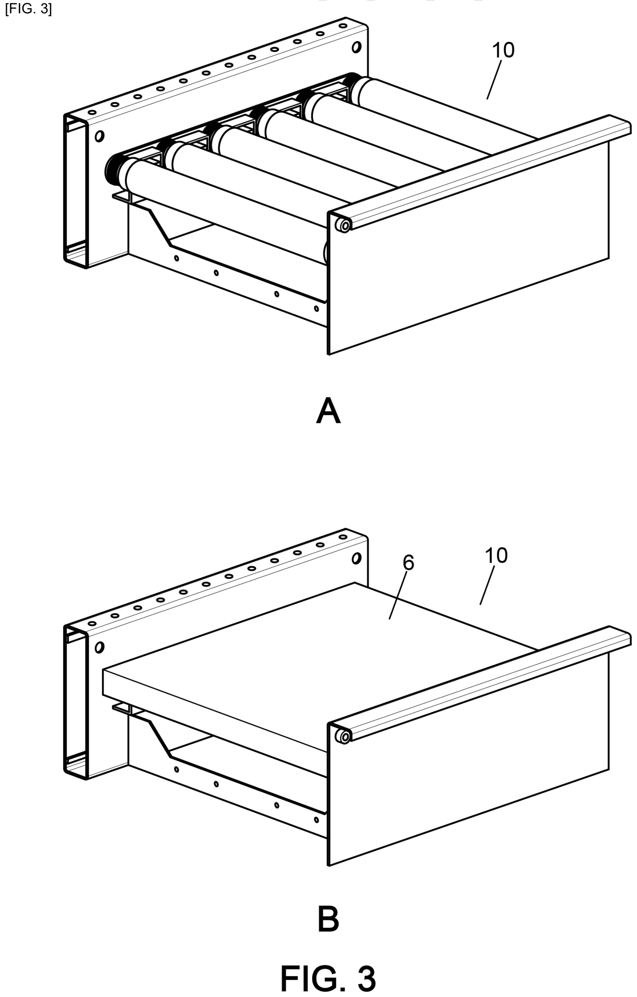

Il est entendu par « configurée pour acheminer », que la piste de convoyage 10 peut, selon un premier exemple notamment illustré en figure 3a, comprendre des organes mobiles telles que des rouleaux pour mettre en mouvement les conteneurs 2. Selon un exemple de réalisation connu, au moins un des rouleaux peut être motorisé, et transmettre aux autres rouleaux le couple de rotation via des courroies de transmission.

Selon un autre exemple, notamment illustré en figure 3b, la piste de convoyage 10 comprend une allée 6, formant une surface sensiblement plane sur laquelle les conteneurs 2 peuvent rouler. Une telle solution peut notamment être adaptée pour l'acheminement de conteneurs 2 par des véhicules automatiques 7 motorisés (« Automated Guided Vehicle » en langue anglaise, ou communément appelés AGV).

La station d'intervention 1 est en outre prévue au niveau d'une zone d'intervention Z dans laquelle un opérateur peut se tenir en vue d'intervenir sur la station d'intervention.

L'opérateur peut typiquement être un opérateur humain, mais il peut s'agir également d'un robot ou d'une installation robotisée.

La station d'intervention peut être posée sur le sol, et la zone d'intervention Z peut être une zone au sol.

Dans un autre exemple (non représenté), la zone d'intervention Z peut être une zone prévue sur une plateforme, distincte du sol. Par exemple, il peut s'agir d'une plateforme surélevée par rapport au sol.

De manière générale, la zone d'intervention Z, au sol ou sur une plateforme, permet à l'opérateur de se tenir à une hauteur H0 dite « de référence ».

La piste de convoyage 10 comprend en outre une portion d'intervention 13, adjacente et positionnée en hauteur par rapport à la zone d'intervention Z.

Il est ici entendu par « adjacente », que la portion d'intervention 13 peut par exemple être définie comme une portion de la station d'intervention 1 qui comporte un bord d'intervention 131 à proximité de la zone d'intervention Z de l'opérateur. De cette façon, ladite portion d'intervention 13 est configurée pour que l'opérateur 3 puisse réaliser des opérations sur les conteneurs 2 acheminés par la piste de convoyage 10 depuis la zone d'intervention Z. Typiquement, l'opérateur peut être amené à se tenir d'un côté dudit bord d'intervention 131, et à réaliser une opération sur un conteneur 2 situé de l'autre côté dudit bord d'intervention 131.

Une telle portion d'intervention 13 est « en hauteur » par rapport à la zone d'intervention Z, en ce qu'elle comporte une hauteur H mesurée par rapport à la hauteur de référence H0 de la zone d'intervention Z. Typiquement, la hauteur H est supérieure à la hauteur H0 , de sorte que la portion d'intervention 13 est surélevée par rapport à la zone d'intervention Z, ce qui rend la portion d'intervention 13 aisément accessible par l'opérateur. Selon un exemple particulier, la hauteur H de la portion d'intervention 13 peut évoluer au voisinage d'une hauteur ergonomique pour l'opérateur.

Typiquement, la hauteur de la portion d'intervention 13 est la hauteur H par rapport à la zone d'intervention Z, la hauteur H est typiquement mesurée au niveau dudit bord d'intervention 131. Par exemple, la hauteur H0 de référence de la zone d'intervention Z peut être égale à zéro, et la hauteur H peut par exemple être comprise entre 65 et 110 cm, pour optimiser l'ergonomie du poste. Dans d'autres cas, si la zone d'intervention Z n'est pas sur le sol, et est située par exemple sur une plateforme, la hauteur de référence H0 pourra être la hauteur de ladite plateforme, et la hauteur H de la portion d'intervention 13 pourra être comprise entre 65 et 110 cm en addition de la hauteur H0 de la zone d'intervention Z.

La station d'intervention 1 peut comprendre un bâti 100, par exemple fixé au sol, sur lequel est montée la piste de convoyage 10.

La piste de convoyage 10 comprend en outre une partie fixe 15 et une partie mobile 14. La partie fixe 15 de la piste de convoyage 10 est une portion de la piste de convoyage solidaire du bâti 100. La partie mobile 14 est alors mobile par rapport à la partie fixe 15.

De manière générale, la partie fixe 15 de la piste de convoyage peut s'étendre sensiblement horizontalement, au moins au voisinage de la jonction avec la partie mobile 14.

La partie mobile 14 de la station d'intervention 1 comprend en outre la portion d'intervention 13. Ainsi, le bord d'intervention 131 de la portion d'intervention 13 est mobile avec la partie mobile 14 de la piste de convoyage 10.

Selon la présente divulgation, la station d'intervention 1 comprend un mécanisme interne de réglage 4 de la piste de convoyage 10 configuré pour mettre en mouvement la partie mobile 14 par rapport à la partie fixe 15, de sorte à régler une hauteur de la portion d'intervention 13 portée par la partie mobile 14.

Par « mécanisme interne », on entend un mécanisme qui fait partie intégrante de la station d'intervention 1, et qui est donc physiquement et structurellement lié à d'autres éléments de ladite station. Plus précisément, le mécanisme interne de réglage 4, tel que décrit dans la présente divulgation, est configuré pour autoriser un guidage en hauteur de la partie mobile 14 de la piste de convoyage 10, qui sert à transporter les conteneurs 2, et par rapport à la partie fixe, voire de préférence configuré pour actionner en hauteur la partie mobile. Cette configuration garantit que l'ajustement de la partie mobile est réalisé directement par un guidage interne à la station, et de préférence par un actionnement interne à la station, et ainsi de préférence sans intervention de composants externes pour l'actionnement en hauteur. De cette façon, grâce au mécanisme interne de réglage 4, il est possible de régler une hauteur H de la portion d'intervention 13 par rapport à la hauteur H0 de la zone d'intervention Z de l'opérateur en mettant en mouvement la partie mobile 14 de la piste de convoyage 10 par rapport à la partie fixe 15.

En particulier, la portion d'intervention 13 est mise en mouvement et se déplace d'une hauteur ΔH pour faire varier sa hauteur H. Comme décrit précédemment, les valeurs de hauteur sont mesurées par rapport à une hauteur de référence H0 de la zone d'intervention Z.

La variation de hauteur ΔH permise par le mécanisme de réglage peut être positive ou négative. Ainsi, il est possible de surélever, ou d'abaisser la portion d'intervention 13, notamment dans un but d'amélioration de l'ergonomie de la station d'intervention 1.

De manière générale, la piste de convoyage 10 peut présenter une direction générale V selon laquelle les conteneurs 2 progressent. Une telle direction générale V correspond typiquement à une direction d'élongation de la piste de convoyage.

Selon un exemple particulier, la portion mobile 14 de la piste de convoyage 10 est reliée à la partie fixe 15, ou au bâti 100, de façon rotative par une articulation 5 présentant un axe de rotation s'étendant transversalement à la direction V. Le réglage de la hauteur H de la portion d'intervention 13 étant alors réalisé par rotation de la partie mobile 14 par rapport à la partie fixe 15 autour de ladite articulation 5.

Autrement dit, l'axe de rotation de l'articulation 5 peut être sensiblement perpendiculaire à la direction d'élongation de la piste de convoyage 10, typiquement horizontal.

Typiquement, la partie mobile 14 comprend un bord proximal, au voisinage de la partie fixe 15, qu'il est avantageux de maintenir à la même hauteur que la partie fixe 15, de sorte que l'acheminement des conteneurs 2 se passe sans obstacle. Ainsi, l'articulation 5, de préférence positionnée au niveau de ce bord proximal, permet de faire varier la hauteur de la portion d'intervention 13 par rotation.

En particulier, la partie mobile 14 de la piste de convoyage 10 peut s'étendre en longueur suivant la direction générale V à partir de ladite articulation 5 jusqu'à une extrémité distale 101, la portion d'intervention 13 étant adjacente à ladite extrémité distale 101. Un bras de levier est ainsi formé, de sorte que la hauteur de la partie mobile 14, au niveau de l'articulation 5, reste inchangée, alors qu'elle varie au niveau de la portion d'intervention 13 située à une extrémité distale 101 de la partie mobile 14.

En conséquence, le réglage de la hauteur de la portion d'intervention 13 conduit à une variation d'inclinaison de la partie mobile 14 : une pente se forme en aval de l'articulation 5. De sorte à minimiser la variation d'inclinaison, pour minimiser l'impact sur l'acheminement des conteneurs 2 qui franchissent l'articulation 5, la distance L entre la portion d'intervention 13 et l'axe de l'articulation 5 pourra être dimensionné pour être relativement grande. Par exemple une telle distance L pourra être supérieure à 1 mètre, voire supérieure à 1,5m, voire supérieure à 2 mètres.

Notamment, une telle distance L pourra être mesurée entre l'axe de l'articulation, et un bord de la portion d'intervention 13 le plus proche dudit axe de l'articulation 5, un tel bord pourra être défini comme étant distant du bord d'intervention 131 d'une distance égale à la dimension du plus grand conteneur étant destiné à être acheminé sur la portion d'intervention 13.

Selon un autre exemple, une telle distance pourra être mesuré entre le bord d'intervention 131 et l'axe de l'articulation.

Avantageusement, la variation d'inclinaison Δθ (ou autrement appelée « course angulaire ») peut être comprise entre -5° et +5° par rapport à l'horizontale. Autrement dit, il pourra être avantageux qu'une distance entre la portion d'intervention 13 et l'axe de l'articulation 5 soit supérieure à 1 mètre, voire supérieure à 1,5 mm, voire supérieure à 2 mètres, voire supérieure à 2,5 mètres pour ainsi obtenir une course de réglage en hauteur de la portion d'intervention 13 suivant la direction verticale au moins égale à plus ou moins 100 mm (±100mm) par rapport à une position nominale de la portion d'intervention, correspondante à une course angulaire de la partie mobile autour de l'axe d'articulation inférieure ou égale à plus ou moins 5°, et de préférence à plus ou moins 4°, par exemple plus ou moins 2°, à savoir une course angulaire limitée.

Selon un mode de réalisation, et pour une position nominale de la portion d'intervention 13 correspondant à un angle d'inclinaison nominal de la portion d'intervention 13 qui peut être de 9° (à ±3°) vers la zone d'intervention, une variation de la course angulaire de la portion mobile 14 autour de l'angle d'inclinaison nominal entraine une course de réglage verticale de la portion d'intervention au moins égale à plus ou moins 100mm (±100mm) autour de la hauteur de la portion d'intervention 13 lorsque dans son inclinaison nominale.

Par exemple la distance entre la portion d'intervention 13 et l'axe de l'articulation 5 peut être de 3 mètres et l'angle d'inclinaison nominal de la portion d'intervention 13 est de 9°. Une variation de plus 2° au-dessus de la position nominale engendre une élévation positive de plus 104 mm et une élévation négative en dessous de la position nominale engendre une élévation négative de moins 104 mm.

La variation d'inclinaison Δθ de la partie mobile 14 est donc une conséquence du réglage en hauteur de la portion d'intervention, qu'il peut être souhaitable d'atténuer.

En particulier, la piste de convoyage 10 de la station d'intervention 1 peut comprendre une première portion d'acheminement 11 et une deuxième portion d'acheminement 12 reliées l'une à l'autre par la portion d'intervention 13. Dans ce cas, la portion d'intervention 13 constitue un segment d'un trajet des conteneurs 2, compris entre deux portions de la piste de convoyage 10, par lequel les conteneurs 2 « passent ». La piste de convoyage 10 est alors configurée pour acheminer les conteneurs 2 par la première portion d'acheminement 11 jusqu'à la deuxième portion d'acheminement 12 en passant par la portion d'intervention 13.

Selon des exemples, il peut être prévu que les véhicules automatisés et/ou la piste de convoyage 10 soient configurés pour stopper temporairement l'acheminement des conteneurs 2 au niveau de la portion d'intervention 13, le temps que l'opérateur réalise l'opération souhaitée.

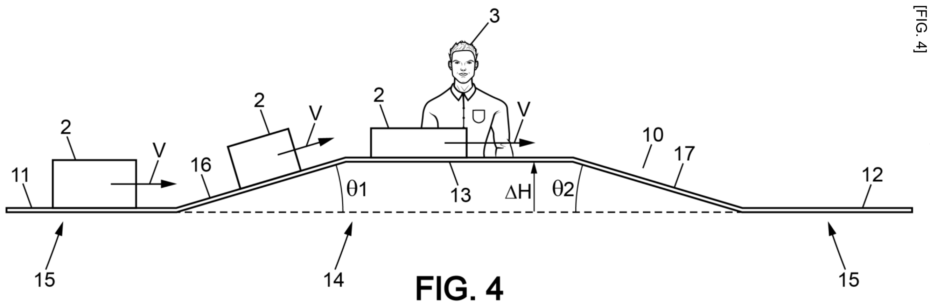

Un exemple particulier de station d'intervention 1 est illustré en figure 4.

Dans cet exemple, la portion d'intervention 13 est comprise entre une première portion d'acheminement 11 et une deuxième portion d'acheminement 12.

Des conteneurs 2 sont acheminés de la première portion d'acheminement 11 jusqu'à la deuxième portion d'acheminement 12 en passant par la portion d'intervention 13. De ce fait, les conteneurs sont acheminés selon une direction principale V.

Le mécanisme interne de réglage 4 (non représenté dans cet exemple) peut typiquement comporter des vérins, dont une extrémité est liée au bâti 100 fixe, et une autre extrémité mobile est liée à la partie mobile 14. Le mécanisme de réglage 4 est configuré pour régler une hauteur H de la portion d'intervention 13 en la faisant varier d'une hauteur ΔH.

Dans cet exemple, le déplacement en hauteur ΔH de la portion d'intervention 13 réalise une variation d'inclinaison de la piste de convoyage 10, notamment en créant une première pente 16 d'une première inclinaison θ1, et une deuxième pente 17 d'une deuxième inclinaison θ2 opposée à la première inclinaison.

Selon l'exemple représenté, la première pente 16 est montante et une deuxième pente 17 descendante. Bien entendu, selon la valeur de variation de hauteur ΔH, qui peut également être négative, le première pente 16 peut être descendante et la deuxième pente 17 être montante.

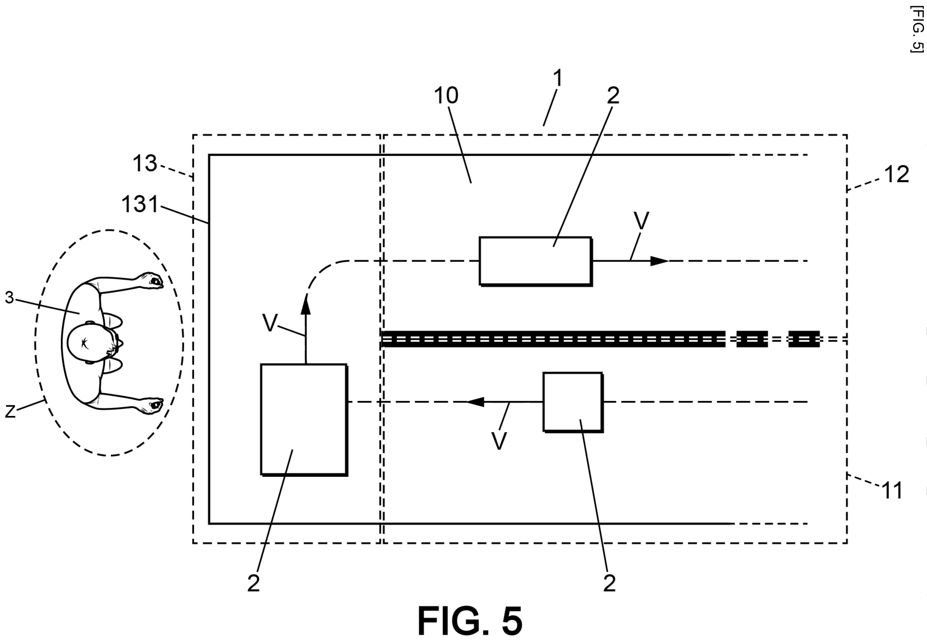

Un autre exemple de station d'intervention 1 est représenté en figure 5.

Dans cet exemple, la première portion d'acheminement 11 et la deuxième portion d'acheminement 12 s'étendent l'une à côté de l'autre, toutes deux d'un même côté de la portion d'intervention 13. De cette façon, la portion d'intervention 13 réalise une extrémité de la piste de convoyage 10, de sorte que les conteneurs 2 sont acheminés, avant l'intervention de l'opérateur, dans un premier sens de circulation en allant en se rapprochant de la portion d'intervention 13, puis vers un second sens de circulation opposé au premier sens de circulation en allant en s'éloignant de la portion d'intervention 13 après l'intervention de l'opérateur.

Selon un exemple particulier, et notamment tel que représenté, la piste de convoyage peut former un « U », la première portion d'acheminement 11 et la deuxième portion d'acheminement 12 étant distinctes l'une de l'autre.

Selon des exemples, la première portion d'acheminement 11 peut être une portion de la piste de convoyage par laquelle les conteneurs 2 passent pour atteindre la portion d'intervention 13, et la deuxième portion d'acheminement 12 peut être une portion de la piste de convoyage 10 par laquelle les conteneurs 2 passent lorsqu'ils quittent la portion d'intervention 13.

Par ailleurs, il est possible que la première portion d'acheminement 11 et la deuxième portion d'acheminement 12 soient confondues et que les conteneurs 2 atteignent la portion d'intervention 13 et la quittent par le même trajet.

De manière générale, la piste de convoyage 10 présente une direction générale V, qui définit la direction selon laquelle les conteneurs 2 progressent. Sur l'exemple particulier de la figure 5, la direction V correspond typiquement à la direction générale d'étendue de la piste de convoyage 10, selon laquelle les conteneurs 2 progressent jusqu'à la portion d'intervention 13 et selon laquelle ils en repartent.

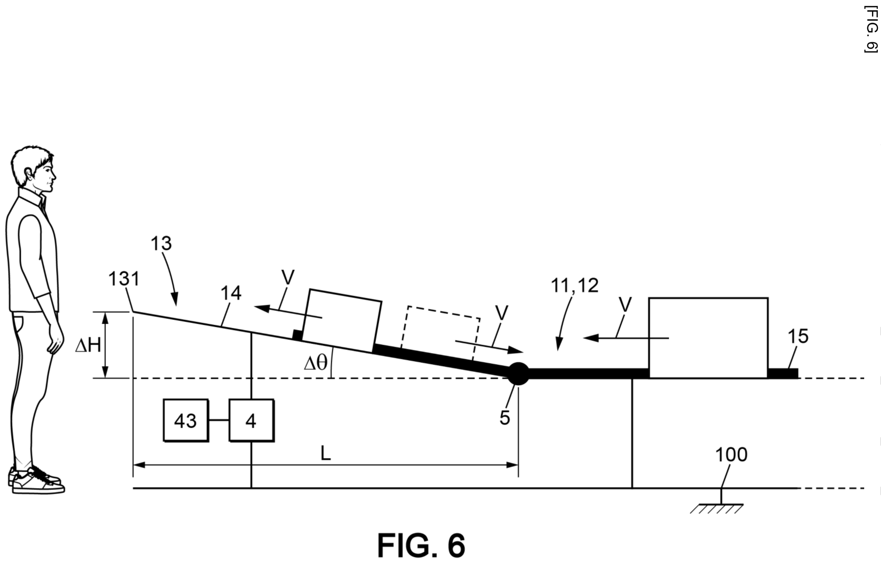

Selon un exemple particulier, et notamment tel que représenté en figure 6, la portion mobile 14 de la piste de convoyage 10 est reliée à la partie fixe 15 de façon rotative par une articulation 5 s'étendant transversalement à la direction V.

En effet l'articulation 5 permet une rotation de la partie mobile 14 par rapport à la partie fixe 15 selon un axe qui coupe transversalement la direction V.

Préférentiellement, l'axe de l'articulation 5 est sensiblement perpendiculaire à la direction générale V.

Selon cet exemple, l'articulation 5 est telle qu'un réglage de la hauteur H de la portion d'intervention 13 induit une variation de l'inclinaison Δθ de la direction d'avance V de la piste de convoyage 10 au niveau de la partie mobile 14. La variation d'inclinaison de la direction d'avance V peut typiquement être réalisée dans un plan vertical, tel que représenté sur l'exemple de la figure 6.

De cette façon, il est possible de procéder au réglage de la hauteur de la portion d'intervention 13, et donc de faire varier sa hauteur d'une valeur ΔH pendant que des conteneurs 2 progressent depuis la partie fixe 15 jusqu'à la partie mobile 14. La création d'une pente, en conséquence d'une variation de la hauteur de la portion d'intervention 13, peut en effet permettre de ne pas interrompre le flux de conteneurs 2 pendant le réglage.

Une telle variation d'inclinaison Δθ de la direction V correspond à une variation d'inclinaison de la partie mobile 14.

A cette fin, la station d'intervention 1 peut comprendre un actionneur 43, configuré pour faire varier la hauteur H de la partie mobile, typiquement en inclinant la partie mobile 14 par rapport à la partie fixe 15.

L'actionneur 43 peut à cet effet comprendre une première extrémité 431 montée pivotante sur la partie fixe 15 de la piste de convoyage 10, et une deuxième extrémité 432 montée pivotante sur la partie mobile 14 de la piste de convoyage 10, de sorte qu'un allongement ou une rétractation de l'actionneur permette de régler la hauteur de la portion d'intervention 13.

En particulier, il est ici entendu par « montée sur la partie fixe », que la première extrémité 431 de l'actionneur 43 est montée sur une partie solidaire de la partie fixe 15, par exemple le bâti 100, ou encore directement sur le sol sur lequel la partie fixe 15 est montée.

Selon un exemple particulier, la partie mobile 14 de la piste de convoyage 10 s'étend en longueur suivant la direction générale V à partir de ladite articulation 5, et se termine par une extrémité distale 101 adjacente à la portion d'intervention 13, de sorte que la zone d'intervention est adjacente à ladite extrémité distale 101 de la partie mobile 14.

Typiquement, ladite extrémité distale 101 comprend un bord d'intervention 131 de la portion d'intervention 13. Un tel bord d'intervention 131 séparant la zone d'intervention Z dans laquelle un opérateur est situé de la portion d'intervention 13 au niveau de laquelle les conteneurs 2 sont acheminés. En pratique, selon un exemple, l'opérateur se tient d'un premier côté du bord d'intervention 131 au niveau de la zone d'intervention Z, et atteint les conteneurs 2 d'un deuxième côté du bord d'intervention 131.

En particulier, la partie mobile 14 de la piste de convoyage 10 s'étend en longueur selon la direction générale V sur une distance L pouvant être supérieure à 1 mètre, préférentiellement supérieure à 2 mètres.

En effet, il peut être avantageux que ladite distance L, qui sépare l'extrémité distale 101 de l'articulation 5, soit relativement importante. Selon la grandeur de la variation de hauteur souhaitée, et pour une même variation de hauteur ΔH, la variation d'inclinaison Δθ est moins importante si la distance L est grande. De cette façon, la pente formée par l'articulation 5 ne gêne pas l'acheminement des conteneurs 2.

De manière générale, le réglage en hauteur de la portion d'intervention 13 est tel que la variation de hauteur ΔH, mesurée par rapport à la hauteur de référence de la zone d'intervention Z de l'opérateur, est la plus importante au niveau du bord d'intervention 131 de la portion d'intervention 13.

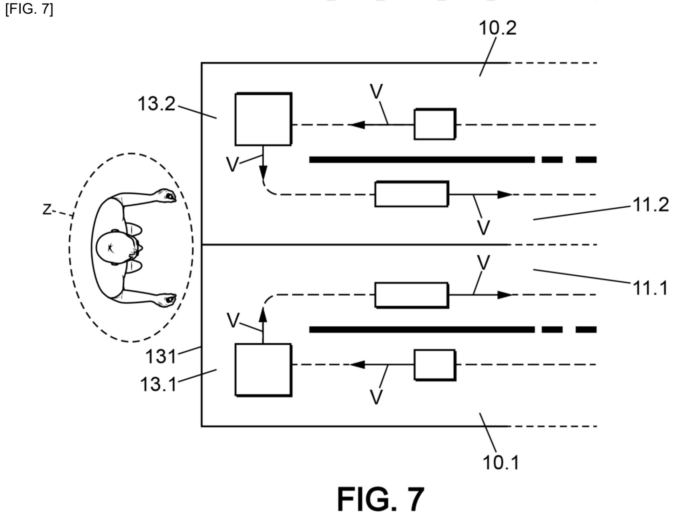

Selon un exemple particulier représenté en figure 7, la station d'intervention 1 comprend une première piste de convoyage 10.1 et une deuxième piste de convoyage 10.2 s'étendant l'une à côté de l'autre, de sorte qu'une première portion d'intervention 13.1 de la première piste de convoyage 10.1 est positionnée à côté d'une deuxième portion d'intervention 13.2 de la deuxième piste de convoyage 11.2.

Dans ce cas, le mécanisme interne 4 de réglage est configuré pour régler la hauteur de chacune des portions d'intervention 13.1, 13.2 de la première et de la deuxième piste de convoyage 10.1, 10.2.

Avantageusement, il est possible que le réglage de la première portion d'intervention 13.1 et de la deuxième portion d'intervention 13.2 soient indépendants l'un de l'autre. A cette fin, le mécanisme interne 4 peut comprendre au moins deux actionneurs, dont un premier actionneur est lié à la première piste de convoyage 10.1, et un deuxième actionneur est lié à la deuxième piste de convoyage 10.2, de sorte que la hauteur des deux portions d'interventions 13.1, 13.2 est réglable de façon indépendante l'une de l'autre.

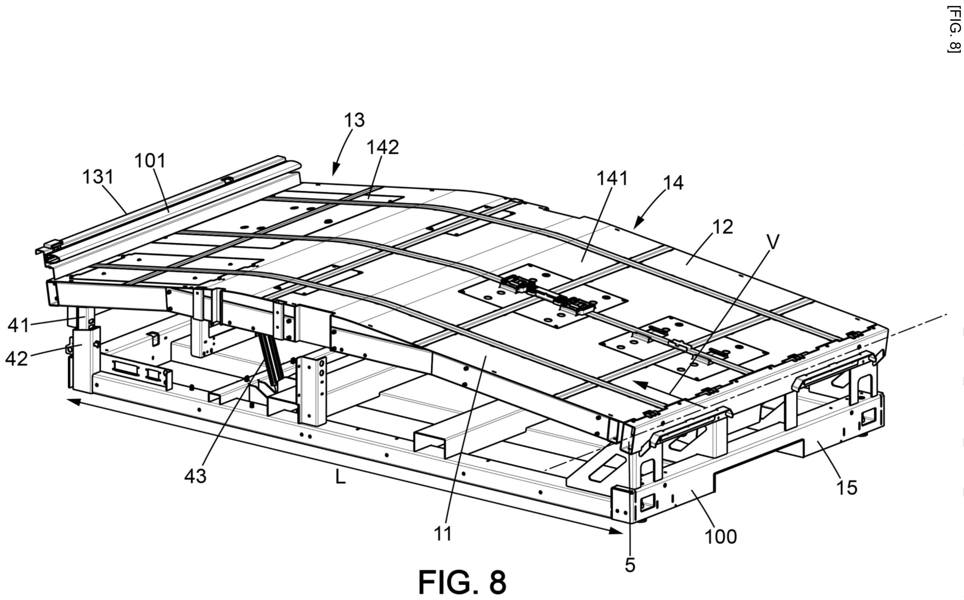

Un exemple particulier de station d'intervention 1 illustré sur les figures 8 à 10 va maintenant être décrit.

Sur ces figures, la partie mobile 14 de la piste de convoyage 10 est particulièrement visible, la partie fixe 15 n'étant pas représentée. La partie mobile 14 est mobile par rapport au bâti 100 sur lequel la partie fixe 15 est montée.

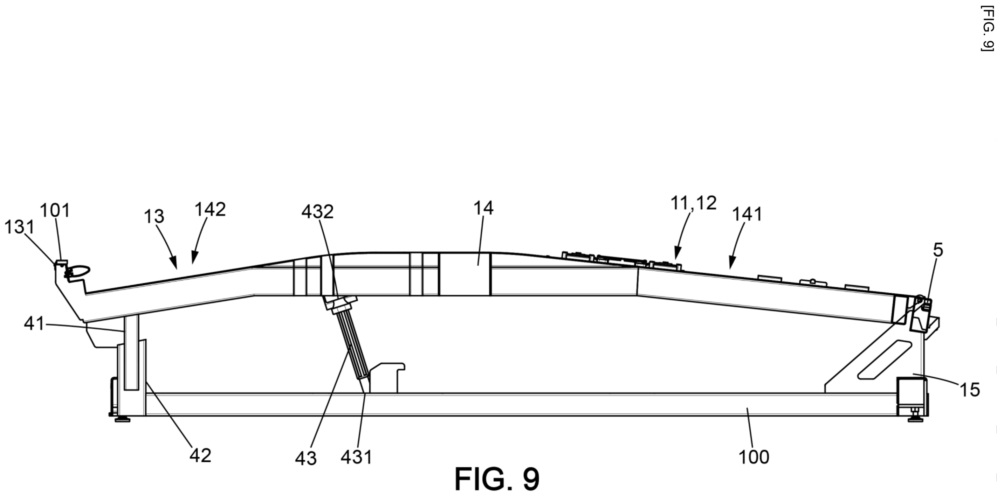

Selon cet exemple, et notamment en référence à la figure 9, la partie mobile 14 comprend une première portion de piste 141 inclinée de sorte qu'elle est montante lorsque l'on s'approche de l'extrémité distale 101, et la portion d'intervention 13 forme une deuxième portion de piste 142 inclinée selon une pente opposée par rapport à la première portion de piste 141. En effet, la deuxième portion 142 est descendante en direction de l'extrémité distale 101. De cette façon, la station d'intervention est configurée pour incliner, vers la zone d'intervention Z, un conteneur 2 acheminé sur la portion d'intervention 13.

Il est entendu par « incliner vers la zone d'intervention » que la portion d'intervention 13 comprend un point bas situé au niveau du bord d'intervention 131, au voisinage de la zone d'intervention Z de l'opérateur.

De cette façon, si un conteneur 2 est ouvert sur le dessus, un fond du conteneur 2 est plus facilement accessible grâce à cette inclinaison.

En outre, selon un exemple, et notamment tel que représenté en figures 8à 10, le mécanisme de réglage 4 peut comprendre des moyens de réglage manuel de la hauteur de la portion d'intervention 13.

Notamment, la station d'intervention 1 peut comprendre une pièce crantée 41 montée à distance, selon la direction générale V, de l'articulation 5 sur l'une de la partie fixe 15 ou de la partie mobile 14 de la piste de convoyage 10, et une pièce complémentaire 42 montée sur l'autre de la partie fixe 15 ou de la partie mobile 14 de la piste de convoyage 10, la pièce crantée 41 comprenant une pluralité de crans correspondant à plusieurs valeurs de hauteur de la portion d'intervention 13 de la piste de convoyage 10, un cran de la pièce crantée 41 étant configuré pour coopérer avec la pièce complémentaire 42 pour régler manuellement la portion d'intervention 13 à une hauteur choisie.

De cette façon, il est possible pour un opérateur, par exemple à l'aide d'un cric, de surélever l'extrémité distale 101 de la partie mobile 14 jusqu'à une hauteur souhaitée, et de faire coopérer un cran de la pièce crantée 41 avec la pièce complémentaire 42 pour régler manuellement la hauteur de la portion d'intervention 13 à la hauteur souhaitée.

Selon des exemples, le mécanisme interne de réglage 4 peut en outre comprendre des moyens de réglage automatique de la hauteur de la portion d'intervention 13.

En effet, la station d'intervention 1 peut comprendre un actionneur 43 dont une première extrémité 431 est montée pivotante sur la partie fixe 15 de la piste de convoyage 10, ou directement fixée au bâti 100, et dont une deuxième extrémité 432 est montée pivotante sur la partie mobile 14 de sorte qu'un allongement ou une rétractation de l'actionneur permet de régler la hauteur de la portion d'intervention 13.

En effet, la portion d'intervention 13 est typiquement localisée au voisinage de la partie distale 101 de la partie mobile 14, de sorte qu'une rotation au niveau de l'articulation 5 de la partie mobile 14 par rapport à la partie fixe 15 engendre une variation de hauteur ΔH au niveau de la portion d'intervention 13.

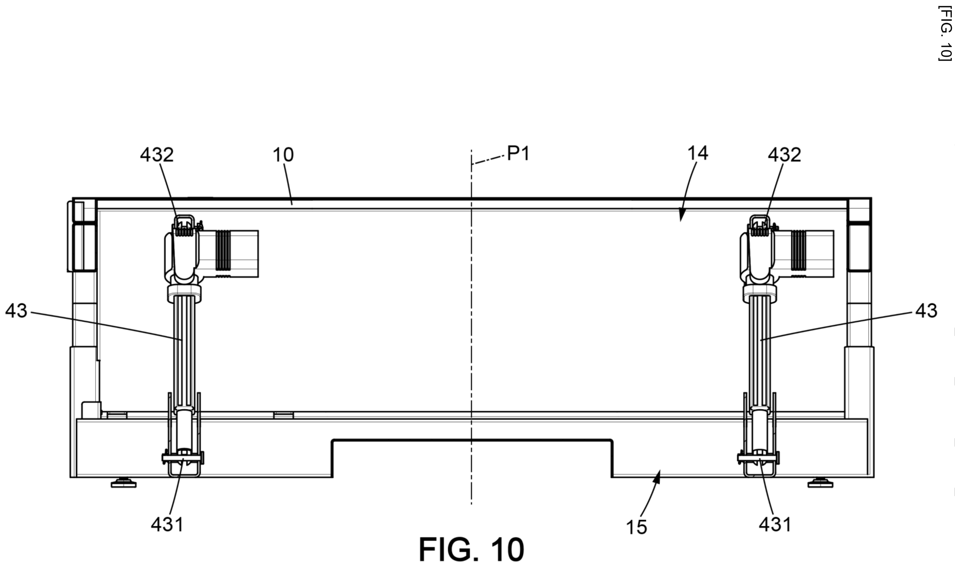

Selon un exemple particulier, et notamment tel que représenté en figure 10, le mécanisme interne 4 de réglage comprend deux vérins positionnés chacun de part et d'autre d'un plan médian longitudinal P1 de la piste de convoyage 10. De manière préférentielle, les deux vérins sont positionnés à égale distance dudit plan médian P1, de sorte que les efforts mécaniques sont équilibrés entre les deux vérins.

En outre, la station d'intervention 1 peut comprendre une interface homme-machine (non représentée) reliée typiquement à un processeur et à une mémoire et via laquelle un opérateur peut transmettre une commande, pour soit :
- régler la hauteur de la portion d'intervention 13 à une valeur de hauteur disponible dans la mémoire, ou
- augmenter ou diminuer la hauteur de la portion d'intervention 13 jusqu'à une valeur de hauteur choisie.

La présente divulgation concerne en outre un procédé de préparation de commande mis en oeuvre par un ensemble comprenant la station d'intervention 1 et un véhicule automatisé 7.

Selon un exemple, le procédé comprend une étape dans laquelle un conteneur 2 est acheminé par un véhicule automatisé 7 jusqu'à la portion d'intervention 13, et une étape d'intervention sur le conteneur 2 réalisée par un opérateur.

Typiquement, lors de l'étape d'intervention, l'opérateur est positionné dans la zone d'intervention Z, d'un premier côté d'un bord d'intervention 131 de la portion d'intervention 13, et intervient sur des conteneurs 2 acheminés sur la portion d'intervention 13 d'un autre côté du bord d'intervention 131 opposé au premier côté.

Selon un exemple dans lequel la station d'intervention 1 comprend une interface homme-machine reliée à un processeur et à une mémoire, et un actionneur tel que décrit précédemment, le procédé comprend une étape de réglage de la hauteur H de la portion d'intervention 13 dans laquelle l'opérateur envoie une instruction via ladite interface homme machine au processeur qui pilote l'actionneur pour répondre à l'instruction de l'opérateur. Ainsi, si la commande de l'opérateur est d'augmenter une hauteur de la portion d'intervention 13, ou d'adopter une valeur de hauteur préenregistrée qui implique une réhausse de la portion d'intervention 13, le processeur pilote l'actionneur pour qu'il s'allonge et lève la partie mobile 14 qui porte la portion d'intervention 13.

Le vérin pourra comporter un moyen d'asservissement configuré pour que le processeur puisse stopper l'actionneur lorsque la valeur de hauteur choisie est atteinte.

Une fois la portion d'intervention 13 réglée selon ladite instruction, l'opérateur intervient sur le conteneur 2 lors d'une étape d'intervention.

Selon un exemple particulier dans lequel la station d'intervention comprend une première et une deuxième piste de convoyage 10.1, 10.2 réglables indépendamment l'une de l'autre, le procédé comprend une première étape de réglage de la hauteur de la première piste de convoyage 10.1, dans laquelle le processeur pilote le premier actionneur, et une deuxième étape de réglage de la hauteur de la deuxième piste de convoyage 10.2 dans lequel le processeur pilote le deuxième actionneur, le réglage de la hauteur de la première étape étant indépendant du réglage de la hauteur de la deuxième étape.

Un tel exemple peut être avantageux lorsqu'un premier conteneur 2 d'une première hauteur est acheminé jusqu'à la première portion d'intervention 13.1, et un deuxième conteneur 2 d'une deuxième hauteur est acheminé jusqu'à la deuxième portion d'intervention 13.2. En effet, notamment pour des raisons ergonomiques, l'opérateur peut choisir une première valeur de hauteur adaptée au premier conteneur 2 pour la première piste de convoyage 10.1, et une deuxième valeur de hauteur adaptée au deuxième conteneur 2 pour la deuxième piste de convoyage 10.2.

De cette façon, la différence de tailles entre les deux conteneurs 2 peut être avantageusement compensée par un réglage indépendant des hauteurs des deux pistes de portions d'intervention 13.1, 13.2.

## Revendications

1. Station d'intervention (1) d'un convoyeur pour le traitement de commandes contenues dans des conteneurs (2), comprenant une piste de convoyage (10) configurée pour acheminer les conteneurs (2), la piste de convoyage (10) comprenant une portion d'intervention (13), adjacente et en hauteur par rapport à une zone d'intervention Z sur laquelle est positionné un opérateur, ladite portion d'intervention (13) étant configurée pour que l'opérateur (3) puisse réaliser des opérations sur les conteneurs (2) acheminés par la piste de convoyage (10), la piste de convoyage (10) comprenant une partie fixe (15) et une partie mobile (14), la partie mobile (14) comprenant la portion d'intervention (13), la station d'intervention (1) comprenant en outre un mécanisme interne de réglage (4) de la piste de convoyage (10) configuré pour régler une hauteur de la portion d'intervention (13), ladite hauteur étant mesurée par rapport à une hauteur de référence de la zone d'intervention de l'opérateur, en mettant en mouvement la partie mobile (14) de la piste de convoyage (10) par rapport à la partie fixe (15).

2. Station d'intervention (1) selon la revendication précédente, dans laquelle la piste de convoyage (10), y compris la portion d'intervention (13), comprend une allée (6) configuré pour permettre à un véhicule automatique (7) supportant un conteneur (2) de rouler sur ladite piste de convoyage (10).

3. Station d'intervention (1) selon l'une des revendications précédentes, dans laquelle la piste de convoyage (10) comporte une première portion d'acheminement (11) et une deuxième portion d'acheminement (12) reliées l'une à l'autre par la portion d'intervention (13), la piste de convoyage (10) étant configurée pour acheminer les conteneurs (2) par la première portion d'acheminement (11) jusqu'à la deuxième portion d'acheminement (12) en passant par la portion d'intervention (13).

4. Station d'intervention (1) selon la revendication précédente, dans laquelle la première portion d'acheminement (11) et la deuxième portion d'acheminement (12) s'étendent l'une à côté de l'autre, toutes deux d'un même côté de la portion d'intervention (13).

5. Station d'intervention (1) selon l'une des revendications précédentes, dans laquelle la piste de convoyage (10) présente une direction générale V selon laquelle les conteneurs (2) progressent, la portion mobile (14) de la piste de convoyage (10) est reliée à la partie fixe (15) de façon rotative par une articulation (5) présentant un axe de rotation s'étendant transversalement à la direction V , le réglage de la hauteur de la portion d'intervention (13) étant réalisé par rotation de la partie mobile (14) par rapport à la partie fixe (15) autour de ladite articulation (5).

6. Station d'intervention (1) selon la revendication précédente, dans laquelle la partie mobile (14) de la piste de convoyage (10) s'étend en longueur suivant la direction générale V à partir de ladite articulation (5) jusqu'à une extrémité distale (101), la portion d'intervention (13) étant adjacente à ladite extrémité distale (101).

7. Station d'intervention (1) selon l'une des revendications 5 ou 6, dans laquelle la partie mobile (14) comprend une première portion de piste (141) montante, suivant la direction principale V vers l'extrémité distale (101), et la portion d'intervention (13) forme une deuxième portion de piste (142), selon une inclinaison opposée par rapport à la première portion (141), la deuxième portion (142) étant descendante en direction de l'extrémité distale (101), configurée pour incliner un conteneur (2) acheminé sur la portion d'intervention (13) vers la zone d'intervention (Z).

8. Station d'intervention (1) selon l'une des revendications précédentes, en combinaison avec la revendication 5, le mécanisme de réglage (4) comprenant une pièce crantée (41) montée à distance, selon la direction générale V, de l'articulation (5) sur l'une de la partie fixe (15) ou de la partie mobile (14) de la piste de convoyage (10), et une pièce complémentaire (42) montée sur l'autre de la partie fixe (15) ou de la partie mobile (14) de la piste de convoyage (10), la pièce crantée (41) comprenant une pluralité de crans correspondant à plusieurs valeurs de hauteur de la portion d'intervention (13) de la piste de convoyage (10), un cran de la pièce crantée (41) étant configurée pour coopérer avec la pièce complémentaire (42) pour régler manuellement la portion d'intervention (13) à une hauteur choisie.

9. Station d'intervention (1) selon l'une des revendications précédentes, comprenant un actionneur (43) dont une première extrémité (431) est montée pivotante sur la partie fixe (15) de la piste de convoyage (10) et dont une deuxième extrémité (432) est montée pivotante sur la partie mobile (14) de sorte qu'un allongement ou une rétractation de l'actionneur permette de régler la hauteur de la portion d'intervention (13).

10. Station d'intervention (1) selon la revendication précédente dans laquelle le mécanisme interne (4) de réglage comprend deux vérins positionnés chacun de part et d'autre d'un plan médian longitudinal (P1) selon la direction d'avance V de la piste de convoyage (10).

11. Station d'intervention (1) selon l'une des revendications précédente en combinaison avec la revendication 3, dans laquelle la station d'intervention (1) comprend une première piste de convoyage (10.1) et une deuxième piste de convoyage (10.2), la première portion d'acheminement de la première piste de convoyage (11.1) s'étendant à côté de la première portion d'acheminement de la deuxième piste de convoyage (11.2), de sorte que la portion d'intervention (13.1) de la première piste de convoyage (10.1) est positionnée à côté de la portion d'intervention (13.2) de la deuxième piste de convoyage (11.2), le mécanisme interne (4) de réglage étant configuré pour régler la hauteur de chacune des portions d'intervention (13.1, 13.2) de la première et de la deuxième piste de convoyage (10.1, 10.2).

12. Station d'intervention (1) selon la revendication précédente, dans laquelle le mécanisme interne comprend au moins deux actionneurs, dont un premier actionneur est lié à la première piste de convoyage (10.1), et un deuxième actionneur est lié à la deuxième piste de convoyage (10.2), de sorte que la hauteur des deux portions d'interventions (13.1, 13.2) est réglable de façon indépendante l'une de l'autre.

13. Station d'intervention (1) selon l'une des revendications précédentes, la station d'intervention (1) comprenant une interface homme-machine reliée à un processeur et à une mémoire, l'interface homme machine étant configurée pour, en réponse à une commande de l'opérateur, soit :
- régler la hauteur de la portion d'intervention (13) à une valeur de hauteur disponible dans la mémoire, ou
- augmenter ou diminuer la hauteur de la portion d'intervention (13) jusqu'à une valeur de hauteur choisie.

14. Ensemble comprenant une station d'intervention (1) selon l'une quelconque des revendications précédentes et au moins un véhicule (7) automatisé de transport de conteneurs configuré pour acheminer les conteneurs (2) le long de la piste de convoyage (10) et au moins jusqu'à la portion d'intervention (13).

15. Procédé de préparation de commande mis en oeuvre par un ensemble selon la revendication précédente, le procédé comprenant une étape dans laquelle un conteneur (2) est acheminé par un véhicule (7) automatisé jusqu'à la portion d'intervention (13), et une étape d'intervention sur le conteneur réalisée par un opérateur.

16. Procédé de préparation de commande selon la revendication précédente, la station d'intervention (1) comprenant une interface homme-machine reliée à un processeur et à une mémoire, et comprenant un actionneur dont une première extrémité est montée pivotante sur la partie fixe (15) de la piste de convoyage (10) et une deuxième extrémité est montée pivotante sur la partie mobile (14) de sorte qu'un allongement ou une rétractation de l'actionneur permette de régler la hauteur de la portion d'intervention (13), le procédé comprenant une étape de réglage de la hauteur de la portion d'intervention (13) dans laquelle l'opérateur envoie une instruction via ladite interface homme machine au processeur qui pilote l'actionneur pour répondre à l'instruction de l'opérateur, et, une fois la portion d'intervention (13) réglé selon ladite instruction, l'opérateur intervient sur le conteneur (2).

17. Procédé de préparation de commandes selon l'une des revendications 15 ou 16, dans lequel la station d'intervention (1) est selon l'une des revendications 1 à 13 en combinaison avec la revendication 12, le procédé comprenant une première étape de réglage de la hauteur de la première piste de convoyage (10.1) dans laquelle le processeur pilote le premier actionneur, et une deuxième étape de réglage de la hauteur de la deuxième piste de convoyage (10.2) dans lequel le processeur pilote le deuxième actionneur, le réglage de la hauteur de la première étape étant indépendant du réglage de la hauteur de la deuxième étape.
